(19) Europäisches Patentamt
European Patent Office
Office européen des brevets

(11) EP 0 794 237 A2

# (12) EUROPEAN PATENT APPLICATION

(43) Date of publication:
**10.09.1997 Bulletin 1997/37**

(51) Int. Cl.[6]: **C09D 5/38**

(21) Application number: **97102376.7**

(22) Date of filing: **14.02.1997**

(84) Designated Contracting States:
**AT BE CH DE DK ES FR GB IT LI NL SE**

(30) Priority: **04.03.1996 US 610175**

(71) Applicant: **BASF CORPORATION**
**Mount Olive, New Jersey 07828-1234 (US)**

(72) Inventors:
- **Newton, David L.**
  **Toledo, Ohio 43613 (US)**
- **Shepler, Stewart**
  **Bowling Green, Ohio 43402 (US)**
- **Dantiki, Sudhakar**
  **Toledo, Ohio 43617 (US)**

(74) Representative: **Kluth, Bernhard et al**
**BASF Lacke + Farben AG,**
**Patente, Lizenzen, Dokumentation,**
**Postfach 6123**
**48136 Münster (DE)**

## (54) Single stage paint compositions

(57) Single stage automotive paint compositions having low volatile organic content (VOC) are disclosed. The low VOC compositions are made from a metallic base resin, tint base, reducer, hardener and a metallic base booster. The metallic base booster provides superior metal control and a very low VOC.

EP 0 794 237 A2

## Description

### Field of the Invention

The present invention relates to paint compositions, and more particularly to automotive paint compositions having low volatile organic content (VOC).

Automotive paint compositions according to the present invention comprise pigmented single stage topcoat formulations, which exhibit superior metal control. The high quality automotive paint compositions are especially useful in refinish paint formulations.

### Background of the Invention

The present invention is directed to automotive paint compositions having a high solids content and low VOC properties. Typically, low VOC coatings have been found to exhibit below average drying and curing properties when compared to conventional automotive coatings with long dust-free and tack-free times and short pot shelf life.

According to one aspect of the present invention, improved low VOC coating compositions with improved drying, curing and durability are disclosed.

Any substrate material can be coated with the coating composition according to the present invention. These substrate materials include such things as glass, ceramics, paper, wood, and plastic. The coating system of the present invention is particularly adapted for mental substrates, and specifically as a single stage metallic automotive topcoat refinish paint. The substrate may be uncoated material or can be primed. The coating composition can be applied using conventional spray equipment or high volume low pressure spray equipment resulting in a high quality finish. Other modes of application are roller coating, brushing, sprinkling, flow coating, dipping, electrostatic spraying, or electrophoresis. Exemplary metal substrates include such things as steel, aluminum, copper, zinc, magnesium and alloys thereof. The components of the compositions can be varied to suit the temperature tolerance of the substrate material. For example, the components can be constituted for air drying (*e.g.*, less than 100°F), low temperature cure (*e.g.*, 100°F - 180°F), or high temperature cure (*e.g.*, over 180°F).

### Summary of the Invention

The present invention relates to a novel coating composition comprising:

| | % Wt |
|---|---|
| (a) Metallic Base | 0.1% to 26% |
| (b) Tint Bases (clear or pigmented bases for color match) | 15% to 28% |
| (c) Metallic Base Booster (metal control + additives) | 9% to 12% |
| (d) Reducer (solvent blend with or without reactive diluents) | 15% to 23% |
| (e) Hardener (usually crosslinking agents of isocyanate type) | 18% to 27% |

According to one aspect of the present invention, improved low VOC coating compositions with improved drying, curing and durability are disclosed.

The coating compositions of the present invention can be used as a pigmented colorcoat. Although the single stage colorcoat is preferred, it will be appreciated that the coatings described herein are not intended to limit the utility to single state pigmented colorcoat.

The single stage colorcoat material comprises any suitable film-forming polymeric material conventionally used in this art including acrylics, alkyd, polyurethanes, polyesters and aminoplast.

Preferred acrylic resins used in the single stage colorcoat may be either thermoplastic (acrylic lacquer systems) or thermosetting. The acrylic lacquer compositions typically include homopolymers of methyl methacrylate and copolymers of methyl methacrylates which contain among others, acrylic acid, methacrylic acid, alkyl esters of acrylic acid, alkyl esters of methacrylic acid, vinyl acetate, acrylonitrile, styrene and the like.

Rheology control agents conventional is this art may be used and include microparticles and microgels. These microgels or microparticles comprise polymer particles in a dispersed state. Microparticle or microgel dispersions, also known as nonaqueous dispersions, useful as rheology control agents in basecoats are disclosed in U.S. Patent Numbers 3,365,414; 4,290,932; 4,377,661; 4,414,357; 4,447,536, which are incorporated by reference.

A key element of the composition is the Metallic Base Booster. The Metallic Base Booster has the following composition.

| | |
|---|---|
| NAD alkyd resin FV | 20% |
| Polyethylene Wax FV | 4% |
| Solvents | 66% |
| Other Additives | 10% |
| | 100% |

The Metallic Base Booster has two primary functions combined in a single package. Firstly, it serves as an additive package to deliver cure catalyst, U.V. protection additives, and surface mar/slip additives.

Secondly, the Metallic Base Booster supplies other ingredients that are actively involved in the metal control. The active metal control ingredients are NAD alkyd resins and preferably Mc Whorter non-aqueous dispersions (NAD) and to a lesser degree Polyethylene wax.

The NAD will interact favorably with aluminum flakes that are surface treated giving good metal control. If the same formula is assembled without surface treating the aluminum with or if the NAD is not present, the appearance will suffer due to poor metal orientation.

The low VOC coating composition useful to form the single stage topcoat formulation are typically made from copolymer compositions characterized as polymerization products of ethylenically unsaturated monomers containing hydroxyl groups and other vinyl monomers wherein the copolymer components are combined in such a manner to give a polymer with a moderate glass transition temperature preferably between about -3°C to about 35°C (using the Fox method of Tg calculation) and a relative weight average molecular weight of less than 10,000. The molecular weight is preferably from about 1,000 to 7,000 based on GPC using polystyrene standards. The hydroxyl number is preferably between 75 and 175 (mg KOH per gram of non-volatile resin). The acid number is preferably between 0 and 10 (mg KOH per gram of non-volatile resin).

## Description of the Preferred Embodiments

The present invention relates to a novel coating composition comprising: An example of the Single Stage Metallic composition would be as follows:

| | % Wt |
|---|---|
| (a) Metallic Base (containing Raybo 41 treatment) | 0.1% to 26% |
| (b) Tint Bases (clear or pigmented bases for color match) | 15% to 28% |
| (c) Metallic Base Booster (metal control + additives) | 9% to 12% |
| (d) Reducer (solvent blend with or without reactive diluents) | 15% to 23% |
| (e) Hardener (usually crosslinking agents of isocyanate type) | 18% to 27% |

A more specific example of the Single Stage Metallic composition would be of the following type.

| | |
|---|---|
| (a) HD17 (metallic base) | 26.24 grams |
| (b) HS10 (clear base) | 28.42 |
| (c) HM7 (Metallic Base Booster) | 12.39 |
| (d) UR40 (reducer) | 15.05 |
| (e) DH42 (isocyanate hardener | 17.90 |
| | 100.00 grams |

The following would be the characteristics of this specific example.

| | |
|---|---|
| (a) VOC | 4.4 lbs/gal |
| (b) pigment/binder ratio | 0.048 |
| (c) % pigment | 2.9% |
| (d) Total Fixed Vehicle Solids | 42.0% |

According to one aspect of the present invention, improved low VOC single stage coating compositions with improved drying, curing and durability are disclosed.

The coating compositions of the present invention are preferably used as a pigmented single stage colorcoat. Although the single stage colorcoat is preferred, it will be appreciated that the coatings described herein are not intended to limit the utility of the reactive urea/urethanes disclosed herein.

The preferred film forming polymers, when crosslinked with isocyanate or non-isocyanate crosslinker, form coatings which have excellent physical properties with short tack-free and dust-free time, excellent pot-life, and no strong odor. A useful polymer can essentially consist of the polymerization product of ethylenicaily unsaturated monomers containing hydroxyl groups and other vinyl monomers wherein the copolymer components are combined in such a manner to give a polymer with a moderate glass transition temperature preferably between about -3°C to about 35°C (using the Fox method of Tg calculation) and a relative weight average molecular weight of less than 10,000. The molecular weight is preferably from about 1,000 to 7,000 based on GPC using polystyrene standards. They hydroxyl number is preferably between 75 and 175 (mg KOH per gram of non-volatile resin). The acid number is preferably between 0 and 10 (mg KOH per gram of non-volatile resin). The ethylenically unsaturated monomers may be selected from, but are not limited to the group essentially consisting of: ethylene and/or ethylenicaily unsaturated alkyl (meth)acrylates such as methyl (meth)acrylate, ethyl (meth)acrylate, propyl (meth)acrylate, 2-propyl (meth)acrylate, butyl (meth)acrylate, 2-butyl (meth)acrylate, 2-methylpropyl (meth)acrylate, t-butyl (meth)acrylate, 2-ethylhexyl (meth)acrylate, cyclohexyl (meth)acrylate, lauryl (meth)acrylate, octyl (meth)acrylate, decyl (meth)acrylate, and isobornyl (meth)acrylate; aryl monomers such as styrene, alpha-methyl styrene, vinyl toluene, t-butyl styrene, benzyl (meth)acrylate and 2-benzylethyl (meth)acrylate; hydroxy monomers such as hydroxyethyl (meth) acrylate, hydroxypropyl (meth)acrylate, hydroxybutyl (meth)acrylate, sec-hydroxybutyl (meth)acrylate, and hydroxyoctyl (meth)acrylate.

Another useful vehicle can essentially consist of the polymerization product of ethylenically unsaturated monomers containing vinyl monomers wherein at least one of the vinyl monomers is glycidyl or acid functional, and optionally vinyl monomers containing hydroxyl groups wherein the copolymer components are combined in such a manner to give a polymer with a moderate glass transition temperature as defined above and a relative weight average molecular weight of less than 10,000, preferably from about 1,000 to 7,000 based on GPC using polystyrene standards. The hydroxyl number is preferably between 75 and 175 (mg KOH per gram of non-volatile resin). The acid number is preferably between 5 and 15 (mg KOH per gram of non-volatile resin). The ethylenically unsaturated monomers may be selected from, but are not limited to the group essentially consisting of: ethylene and/or ethylenicaily unsaturated monomers alkyl (meth)acrylates such as methyl (meth)acrylate, ethyl (meth)acrylate, propyl (meth)acrylate, 2-propyl (meth)acrylate, butyl (meth)acrylate, 2-butyl (meth)acrylate, 2-methylpropyl (meth)acrylate, t-butyl (meth)acrylate, 2-ethylhexyl (meth)acrylate, cyclohexyl (meth)acrylate, lauryl (meth)acrylate, octyl (meth)acrylate, decyl (meth)acrylate, stearyl (meth)acrylate, dicyclopentadienyl (meth)acrylate, and isobornyl (meth)acrylate; aryl monomers such as styrene, alpha-methyl styrene, vinyl toluene, t-butyl styrene, benzyl (meth)acrylate and 2-benzylethyl (meth)acrylate; hydroxy monomers such as hydroxyethyl (meth)acrylate, hydroxypropyl (meth)acrylate, hydroxybutyl (meth)acrylate, sec-hydroxybutyl (meth)acrylate, and hydroxyoctyl (meth)acrylate; acid functional monomers such as acrylic acid, methacrylic acid, maleic acid, and itaconic acid; glycidyl functional monomers such as glycidyl (meth)acrylate. Optionally this co-vehicle may be subsequently or in situ reacted to a fatty acid through glycidyl groups or reacted to an oxirane functional compound such as the glycidyl ester or an organic acid through organic acid groups.

The vehicle can also consist essentially of an acrylic polymer partially esterfied by means of a natural or synthetic fatty acid, obtained from the following classes with relative proportions of:

1. 5% to 60% by weight of groups originating from the olefinic polymerization of styrene or of a-methyl-styrene or of vinyl toluene.

2. 10% to 70% by weight of groups originating from the olefinic polymerization of a hydroxyalkyl acrylate or methacrylate in which the alkyl group contains 2 to 12 carbon atoms and preferably from 2 to 6 carbon atoms.

3. 5% to 60% by weight of groups originating from the olefinic polymerization of one or more alkyl mono-, di-, or triacrylates or methacrylates, in which the alkyl group contains 2 to 18 carbon atoms and preferably from 2 to 6 carbon atoms, characterized in that is comprises successively:

(a) an olefinic polymerization carried out without a chain transfer agent in a solvent between 140°C and 160°C with a free radical initiator catalyst, and

(b) a partial esterification in a solvent between 165°C and 185°C with an esterification catalyst; the said polymer being partially esterfied, on its hydroxyl groups, by means of a saturated or unsaturated synthetic or optionally modified natural fatty acid. The quantity of fatty acid employed representing from 10% to 25% by weight of the said partially esterified polymer with a final product having a hydroxyl number of between 100 and 160 (mg KOH per gram of non-volatile resin), and an acid number of 0 to 10 (mg KOH per gram of non-volatile resin).

The coating compositions of the present invention are especially useful in automotive refinish coating compositions. These coatings can be designed as air-dry, oven bake or radiation cured coatings.
The coating compositions of the present invention typically comprise the following:

(i) a principal resin such as an acrylic, polyester, acrylester or urethane resin containing functional groups such as hydroxyl, carboxyl, and amino functional groups.

(ii) a reactive urea/urethane compound compatible with the principal resin.

(iii) a curing agent such as an isocyanate and/or a mixture of curing agents, and optionally additives such as accelerators, anti-sagging agents, flow agents, dryers, UV absorbers, etc. known in the coating art.

The reactive urea/urethane compounds typically combine the reaction product of an isocyanate with an alkaolamine that can be represented as:

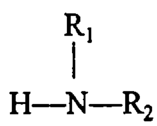

where $R_1$ = alkyl or cycloaliphatic or benzylic type aryl (shielded aromatic ring) radical with a hydroxyl group.

where $R_2$ = hydrogen or alkyl or cycloaliphatic or benzylic type aryl (shielded aromatic ring) radical with or without a hydroxyl group.

Suitable amines are the alkanolamines ad include but are not limited to: 2-(propylamino)ethanol, 2-(methylamino)ethanol, 2-(ethylamino)ethanol, 2-(t-butylamino)ethanol, 2-(n-butylamino)ethanol, diisopropylamine and diethanolamine.

Suitable polisocyanates useful in the invention include isophorone diisocyanate, tetramethyl xylene diisocyanate, dicyclohexylmethane-4, 4'-diisocyanate, the isocyanurate of isophorone diisocyanate and the isocyanurate of hexamethylenediisocyanate.

The reactive urea/urethane compounds oligomers preferably contain primary hydroxyl groups, low molecular weight, preferably with a weight average molecular weight less than 6,000, as measured by gel permeation chromatography relative to polystyrene standards, a low polydispersity, preferably less than 2.0, and high Tg or hardness.

Aliphatic, aromatic and/or other groups can also be incorporated into the urea/urethane compound by the reaction of -N=C=O groups on the polyisocyanate with other reactants containing abstractable hydrogens such as alcohols.

More specifically, the present reactive urea/urethanes relate to the reaction product of an isocyanate preferably a triisocyanurate or a trimer, with a multi-functional chemical reagent containing at least one group with an active hydrogen atom. Typical isocyanates useful in the invention include isophorone diisocyanate, tetramethyl xylene diisocyanate, dicyclohexylmethane-4,4'-diisocyanate, trimer of tetramethylzylene diisocyanate, triisocyanurate of isophorone diisocyanate, and triisocyanurate of hexamethylene diisocyanate. Some commercial examples of the isocyanates useful in this invention including but not limited to, Vestanat T1890 (Huels America), Desmodur Z-4370 (Miles Inc.) Tolonate HDT

(Rhone-Poulenc Inc.) and Cythane 3160 (American Cyanamid). T1890 and Z-4370 are both based on isphorone diisocyanate (IPDI) and Cythane 3160 is based on tetramethyl xylene diisocyanate, Tolonate HDT based on hexamethyl diisocyanate.

The components of a composition of the invention generally are incorporated in an organic solvent and/or diluent in which the materials employed are compatible and soluble to the desired extent. Organic solvents which may be utilized include, for example, alcohols, ketones, aromatic hydrocarbons, esters or mixtures thereof. Illustrative of organic solvents of the above type which may be employed are alcohols such as ethanol, propanol, isopropanol and butanol; ether alcohols such as ethylene glycol monoethyl ether, ethylene glycol monobutyl ether, propylene glycol monomethyl ether, and dipropylene glycol monoethyl ether, ketones such as methyl ethyl ketone, methyl n-butyl ketone, methyl n-amyl ketone, and methyl isobutyl ketone; ester such as n-butyl acetate, methoxy propyl acetate, and hexyl acetate; and aromatic hydrocarbons such as xylene, toluene, and naphtha.

Both isocyanates and non-isocyanate crosslinking agents may be used in these coatings compositions. Isocyanate crosslinking agents of utility in these coatings are essentially those commonly used in the art. They include but are not limited to biurets, isocyanurates, allophanates or adducts of toluene dissocyanate, hexamethylene diisocyanate, isophorone diisocyanate and meta-tetramethyl xylene diisocyanate. The preferred index between the isocyanate groups and the total of all reactive groups contained in the coating with which isocyanates may react is 0.5 to 2.5 on a molar basis.

Additives of utility in these coatings are those commonly used in the art. Mar and slip agents and defoamers which find utility included but are not limited to Byk 141, Byk 304, Byk 306, Byk 307, Byk 325, Byk 331, Byk 341, Dow Corning #7, Dow Corning #54, Dow Corning #200, General Electric SF-69, Troy Chemical Troysol S366, Troy Chemical Troysol AFL, Tego Glide 410, Miles OL44.

Additives also finding utility are curing catalysts which include but are not limited to organic-metallic compounds such as dibutyltindioxide, dibutyltindilaurate, zinc octoate, amine compounds such as triethylamine, 2-diethylaminoethanol, triethylenediamine, organic acids such as p-toluene sulfuric acid, dinonylnaphthalene disulfonic acid and dibutyl sulfonic acid.

Also finding utility are flow ad rheology modifying agents which include but are not limited to synthetic amorphous hydrophobic silica such as Degussa Aerosil R972, synthetic amorphous hydrophilic silica Degussa Aerosil 200, organo clays, polyethylene was dispersions, polypropylene wax dispersions, polyamide wax dispersions, ethylene vinyl acetate wax dispersions. Agents such as Byk Anti-terra 202, Byk Anti-terra 204, Byk Anti-terra V, Byk W-960, Byk R405, Byk P104, Byk P-104s; Troy Chemical Troythix Antisag 4, Troy Chemical Troythix Antisettle; Raybo Chemical Raybo 6, Raybo Chemical Rabo 94, and Tego Chemie ZFS 460.

Also finding utility are pigment wetting and dispersing aids which include but are not limited to ICI Solsperse hyperdispersants such as Solsperse 5000, Solsperse 12000, Solsperse 22000 and Solsperse 24000; Troy Chemical Troysol CD1, Troy Chemical Troysol CD2 and Troy Chemical Troysol 98C; Daniel Products DispersAyd 9100; Raybo Chemical Co. dispersants such as Raybo 41 and Raybo 63; Byk Anti-terra U, Byk Anti Terra 202, Byk W-960, Byk P-104, Disperbyk 160, Disperbyk 162, Disperbyk 163; Nuodex Nuospherse 657; Nuodex Nuosperse 700.

Also finding utility in these coatings are ultraviolet light absorbers and stabilizers which include but are not limited to Sandoz Chemicals Sanduvor 3206, Sanduvor VSU, Sanduvor 3050; Ciba Geigy Corp. Tinuvin 123, Tinuvin 292, Tinuvin 328, Tinuvin 440, Tinuvin 900, Tinuvin 1130.

Also finding utility in these coatings are various types pigments common to the art which include but are not limited to titanium dioxide, graphite, carbon black, zinc oxide, cadmium sulfide, chromium oxide, zinc sulfide, zinc chromate, strontium chromate, barium chromate, lead chromate lead cyanamide, lead silico chromate, chromium oxide, zinc sulfide, yellow nickel titanium, yellow chromium titanium, red iron oxide, transparent red iron oxide, yellow iron oxides, transparent yellow oxide, black iron oxide, naphthol reds and browns, anthraquinones, dioxazine violet, isoindoline yellows, arylide yellow and oranges, ultramarine blue, phthalocyanine complexes, amaranth, quinacridones, halogentated thioinditgo pigments, extender pigments such as magnesium silicate, aluminum silicate, calcium silicate, calcium carbonate, fumed silica, barium sulfate.

The coating composition can be applied using conventional spray equipment or high volume low pressure spray equipment resulting in a high quality finish. Other modes of application are roller coating, brushing, sprinkling, flow coating, dipping, electrostatic spraying, or electrophoresis. Exemplary metal substrates include such things as steel, aluminum, copper, zinc, magnesium and alloys thereof. The components of the compositions can be varied to suit the temperature tolerance of the substrate material. For example, the components can be constituted for air drying (*e.g.*, less than 100°F), low temperature cure (*e.g.*, 100°F to 180°F), or high temperature cure (*e.g.*, over 180°F).

The coatings may be formulated to meet the requirements of the equipment intended for use during application.

The following example is given to illustrate the low VOC coatings according to the present invention.

**Example #1**

A single stage metallic composition was prepared according to the following:

| | |
|---|---|
| HD17 (metallic base) | 26.24 grams |
| HS10 (clear base) | 28.42 |
| HM7 (Metallic Base Booster) | 12.39 |
| UR40 (reducer) | 15.05 |
| DH42 (isocyanate hardener | 17.90 |
| | 100.00 grams |

The coating has the following:

| | |
|---|---|
| VOC | 4.4 lbs/gal |
| pigment/binder ratio | 0.048 |
| % pigment | 2.0% |
| Total Fixed Vehicle Solids | 42.0% |

Breakdown of Fixed Vehicle Solids for this specific example:

| | |
|---|---|
| NAD resin FV | 2.5% |
| Polyethylene Wax FV | 0.5% |
| Acrylic Resin FV | 26.2% |
| Isocyanate FV | 12.8% |

The metallic Base Booster as described here has the following composition:

| | |
|---|---|
| NAD alkyd resin FV | 20% |
| Polyethylene Wax FV | 4% |
| Solvents | 66% |
| Other Additives | <u>10%</u> |
| | 100% |

The Metallic Base Booster has two primary functions combined in a single package. Firstly, it serves as an additive package to deliver cure catalyst, U.V. protection additives, and surface mar/slip additives.

Secondly, the Metallic Base Booster supplies other ingredients that are actively involved in the metal control of properly treated aluminum flakes. The active metal control ingredients are the McWhorter 214-2288 non-aqueous dispersion (NAD) and to a lesser degree the Polyethylene wax.

The NAD interacts favorably with aluminum flakes that are surface treated with Raybo 41 giving good metal control. If the same formula is assembled <u>without</u> surface treating the aluminum with Raybo 41 or if the NAD is not present, the appearance will suffer due to poor metal orientation.

The Polyethylene wax plays asecondary metal control role and tends to bloom to the surface of the wet paint film aiding in more uniform appearance at the surface.

**<u>Example 2</u>**

The following ingredients are added to a clean aluminum slurry tank.

| | |
|---|---|
| Xylene | 5.33 lbs |
| n-butyl acetate | 5.33 |
| Raybo 41 - alkyl amine & fatty acid | 1.68 |
| While mixing, add the aluminum paste. | |
| Silberline 3166AR Aluminum | 20.83 |
| When aluminum flakes are fully dispersed add the following: | |
| 342CD0632 (Low VOC acrylic resin) | 66.31 |
| Byk 077 (Defoamer) | 0.10 |
| silicone hindered amino (light Stabilizer) | |
| Tinuvin 292 (HALS) | 0.42 |
| | 100.00 lbs |

The need for controlling the movement and orientation of aluminum flakes in automotive finishes is well established. When uncontrolled movement of the aluminum flakes occurs, the result is a striped, mottled, and generally unacceptable appearance. Part of the mechanism of "metal control" or hindered movement of aluminum flakes is accomplished with a Metallic Base Booster made in the following manner.

**Example 3**

The following items are added to a clean vessel:

| | |
|---|---|
| methyl n-amyl ketone | 7.04 |
| Solvesso 100 (aromatic blend) | 16.45 |
| xylene & higher wt. | |
| dibutyltin dilaurate | 0.012 |
| Tinuvin 292 (HALS) aline | 9.00 |
| (mar/slip aid) silicone | 1.30 |
| (10% polyethylene wax in xylene) | 38.94 |
| Add Nad resin slowly to above items with mixing to avoid shocking wax. | |
| Mc Whorter alkyl (NAD resin) | 27.26 |
| | 100.00 |

The use of Reducers to adjust the ready for use viscosity or to provide reactive sites for crosslinking is prior art. These adjustments can be accomplished with a variety of high solids reducers of the type employed in other high solids coating products. This also includes the reactive diluent type reducers employed to reach 3.5 VOC goals in Southern California.

The preferred crosslinking or Hardener packages are of the high solids types used for Low VOC coatings and are primarily of the isocyanate type but not limited to these.

**Example 4**

The following compositions were tested as follows:

| 3.5 VOC System | |
|---|---|
| Green Tint Base | 28.91 lbs |
| Aluminum Tint Base | 12.38 |
| Metallic Base Booster | 9.08 |
| Reactive Reducer aldrims and aspectic ester | 22.74 |
| Med. Isocyanate Hardener | 26.89 |
| | 100.00 |

| 4.5 VOC Natural System | |
|---|---|
| Green Tint Base | 38.78 lbs |
| Aluminum Tint Base | 16.62 |
| Metallic Base Booster | 12.19 |
| Med. Reducer conventional solvent blends | 14.80 |
| Isocyanate Hardener | 17.60 |
| | 100.00 |

These ready-to-spray formulations can be applied to the desired clean, dry substrate with conventional spray guns like the De Vilbiss JGA-502 or the newer HVLP types like the DeVilbiss JGHV-530. Air pressures at the gun should be adjusted to 50 to 60 psi at the gun mounted regulator. The settings on the guns should be adjusted to deliver a full wet coat. The material should be applied in two wet coats with a 5 to 10 minute flash time between coats. If necessary for appearance, a third light coat or "dust coat" can be applied to correct any minor cosmetic flaws in the coating or mistakes in spray methodology that may have occurred.

<u>Results of Spraying</u> These systems have given the following quantities:

| | |
|---|---|
| Pot Life (50% increase in Ford 4) | 60 minutes |
| Dust Free Times | 80 minutes |
| Appearance | Excellent |
| Sag Resistance | Excellent |
| 20° Gloss at 1 week | 77 to 80 |
| Hiding 3.5 VOC/4.5 VOC | 2 Coats (3.3mils/1.5mils) |
| Adhesion | Excellent Gt0 |
| Humidity Resistance (10 day 100% Hum) | Excellent Gt0 - ASTM Method |
| Gasoline Resistance | Pass @ 3-4 days |

## Claims

**1.** An automotive paint composition comprising metallic base, resin tint base, reducer, hardener and a metallic base booster.

**2.** The composition of Claim 1 wherein the metallic base booster comprises an alkyd resin, polyethylene wax and solvent for the resin.

**3.** The composition of Claim 1 used as a pigmented color coat.

**4.** The composition of Claim 1 which additionally contains a rheology control agent.

**5.** The composition of Claim 4 wherein the rheology control agent is a microgel.

**6.** The composition of Claim 1 wherein the metallic base resin is selected from the group consisting of acrylic, poly urethane, polyester and amino plast.